# EUROPEAN PATENT SPECIFICATION

(11) **EP 2 042 559 B1**
(45) Date of publication and mention of the grant of the patent: **27.02.2013**
(21) Application number: 08253067.6
(22) Date of filing: 18.09.2008
(51) Int. Cl.: C08L 83/04

(54) **Addition curable silicone rubber composition and cured product thereof**
Additionsvernetzbare Silikon-Gummi-Zusammensetzung und gehärtetes Produkt daraus
Composition d'addition de caoutchouc de silicone durcissable et produit durci correspondant

(30) Priority: 21.09.2007 JP 2007244635
(43) Date of publication of application: 01.04.2009
(73) Proprietor: Shin-Etsu Chemical Co., Ltd., Tokyo (JP)
(72) Inventor: Ikeno, Masayuki, Annaka-shi, Gunma-ken (JP); Meguriya, Noriyuki, Annaka-shi, Gunma-ken (JP); Ide, Shinichi, Annaka-shi, Gunma-ken (JP)
(74) Representative: Stoner, Gerard Patrick

(56) References cited:
- EP-A- 0 432 502
- EP-A- 1 311 011
- DE-A1- 3 532 686

## Description

This invention relates to a method of forming an addition curable silicone rubber composition having a minimized content of reactive volatile siloxane compounds, more specifically volatile cyclic low-molecular-weight siloxane compounds containing a silicon-bonded hydrogen atom (often referred to as "SiH functional group," hereinafter) and having hydrosilylating addition reactivity, and a cured product thereof. The invention also relates to a method of forming a crosslinker for an addition curable silicone rubber composition.

### BACKGROUND

Owing to excellent properties such as weather resistance, electrical properties, low compression set, heat resistance and freeze resistance, silicone rubber is widely used in a variety of fields including electronic, automobile, building, medical, food and other fields. Exemplary applications include potting compounds and adhesives for electric and electronic parts; rubber contacts used as rubber contact keys in remote controllers, computer keyboards, peripheral equipment, and musical instruments; building gaskets; rolls in copiers and printers such as developing rolls, transfer rolls, charging rolls, and paper feed rolls; vibration-dampers in audio equipment; and compact disk gaskets in computer drives.

While there is an increasing demand for silicone rubber, it is desired to have silicone rubber having better properties and in particular, to reduce a low-molecular-weight siloxane fraction in silicone rubber. One exemplary low-molecular-weight siloxane is the cyclic dimethylpolysiloxane described in JP-A 6-329803. In JP-A 3-157474 corresponding to USP 5,145,931, the low-molecular-weight siloxane is defined as having a vapor pressure of at least 10 mmHg at 200°C and exemplary linear and cyclic siloxanes are described.

The low-molecular-weight siloxane is removed from the base polymer by vacuum evaporation at elevated temperature although complete removal is difficult. Most often, the low-molecular-weight siloxane fraction is left at a level of approximately 1% by weight or even at a lower level of 0.5% by weight. Low-molecular-weight siloxanes will volatilize from the cured rubber not only in a high-temperature atmosphere, but also at room temperature, though slightly, and deposit on the surrounding members to raise various problems including clouding and turbidity, contact failure, poor adhesion, and hydrophobic surface. These problems can be mitigated to some extent by post-curing the cured rubber at high temperature. Where rubber parts are used in a sealed state or combined with less heat resistant resins, it is impossible to expose the rubber to high temperature. In addition, once low-molecular-weight siloxanes have volatilized from the cured rubber and deposited on the surrounding member, those siloxanes which are non-functional (that is, free of SiH functional groups and silicon-bonded alkenyl groups capable of participating in hydrosilylating addition reaction) can be readily removed by such operation as wiping with a solvent. Unlike the non-functional siloxanes, low-molecular-weight cyclic siloxanes having SiH functional groups cannot be readily removed because they adhere to the substrate due to their reactivity.

Low-molecular-weight cyclic siloxanes having SiH functional groups include those of the following formula: 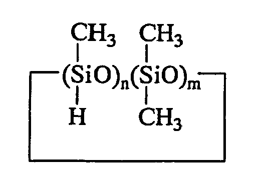 wherein n is an integer of 1 to 10, m is an integer of 0 to 9, and the sum of n+m is an integer of 3 to 10.

As pointed out above, many patents refer to the reduction of low-molecular-weight siloxanes, but not to low-molecular-weight siloxanes having SiH functional groups. The SiH functional low-molecular-weight siloxanes are derived from organohydrogenpolysiloxane, which is generally obtained through equilibration polymerization of tetramethylcyclotetrasiloxane and octamethylcyclotetrasiloxane in the presence of a catalyst such as activated clay or sulfuric acid (see JP-A 3-157474 and JP-A 7-292343). In the organohydrogenpolysiloxane product resulting from such a conventional equilibration polymerization technique, SiH functional low-molecular-weight cyclic siloxanes are incidentally present in an amount of approximately 5% by weight. The organohydrogenpolysiloxane is less heat resistant and suffers from the problem that it is not amenable to reduction of low-molecular-weight siloxane at 200°C or higher temperature, unlike the alkenyl-containing organopolysiloxanes commonly used as the base polymer in addition curable silicone rubber compositions. Undesirably, a significant amount of SiH functional low-molecular-weight siloxane is left in the cured product.

Our aim herein is to provide new and useful methods for forming addition curable silicone rubber compositions having a minimized content of SiH-functional low-molecular-weight siloxane in the cured state, and a cured product thereof. Another aim

EP 0432502 describes an adhesive for bonding a semiconductor pellet to an attachment site in which the adhesive is an addition reaction-curing silicone rubber composition containing a low amount of low-molecular weight siloxanes. This document forms the silicone rubber composition and subsequently removes the low molecular weight siloxane by-product. DE 3532686 describes optically clear polysiloxane compositions for use in the formation of contact lenses and intraocular lenses. EP 1311011 describes a rubber composition containing an organopolysiloxane component and in some cases formed by removing low molecular weight components from the organopolysiloxane itself.

Our aim herein is to provide new and useful methods for forming addition curable silicone rubber compositions having a minimized content of SiH-functional low-molecular-weight siloxane in the cured state, and a cured product thereof. Another aim is to provide new and useful methods for forming crosslinkers for addition curable silicone rubber compositions.

The inventors have found that when an organohydrogenpolysiloxane is synthesized through cohydrolytic condensation reaction of one or more organoalkoxysilanes having an SiH functional group and one or more organoalkoxysilanes free of an SiH functional group, SiH functional group-containing low-molecular-weight siloxane is substantially absent in that organohydrogenpolysiloxane and an addition curable silicone rubber composition comprising the same as a crosslinker.

In one aspect, the present invention provides a method for forming an addition curable silicone rubber composition comprising an organohydrogenpolysiloxane containing at least two silicon-bonded hydrogen atoms in a molecule as a crosslinker, the organohydrogenpolysiloxane being synthesized through cohydrolytic condensation reaction of one or more organoalkoxysilane having an SiH functional group and one or more organoalkoxysilane free of an SiH functional group.

In a preferred embodiment, the organoalkoxysilane having an SiH functional group and/or the organoalkoxysilane free of an SiH functional group is selected from monoalkoxysilanes and dialkoxysilanes.

In a preferred embodiment, the organoalkoxysilane having an SiH functional group and/or the organoalkoxysilane free of an SiH functional group is an alkoxysilane having any one of the following formulas:

HR⁴Si(OR')₂, HR⁴₂SiOR', R⁴₂Si(OR')₂, and R⁴₃SiOR'

wherein R⁴ is each independently a silicon-bonded, unsubstituted or substituted monovalent hydrocarbon group free of aliphatic unsaturation, and R' is each independently an unsubstituted or alkoxy-substituted monovalent hydrocarbon group of 1 to 4 carbon atoms. The organohydrogenpolysiloxane is typically synthesized through cohydrolytic condensation reaction of H(CH₃)Si(OCH₃)₂, at least one member selected from (CH₃))₂Si(OCH₃)₂, (C₆H₅)₂Si(OCH₃)₂, and (CF₃C₂H₄)(CH₃)Si(OCH₃)₂, and at least one member selected from (CH₃)₃SiOCH₃ and H(CH₃)₂SiOCH₃.

In a preferred embodiment, the organohydrogenpolysiloxane contains cyclic low-molecular-weight siloxanes having a degree of polymerization of up to 10 and containing at least one silicon-bonded hydrogen atom in an amount of up to 3% by weight. In this case, the content of cyclic low-molecular-weight siloxanes having a degree of polymerization of up to 10 and containing at least one silicon-bonded hydrogen atom is preferably up to 0.5% by weight based on the weight of the silicone rubber composition.

In another aspect, the present invention provides a method of forming a silicone rubber by curing of the silicone rubber composition defined above, wherein the amount of residual cyclic low-molecular-weight siloxanes having a degree of polymerization of up to 10 and containing at least one silicon-bonded hydrogen atom is up to 0.5% by weight.

In a further aspect, the present invention provides a method of forming crosslinkers for an addition curable silicone rubber composition consisting of the above-defined organohydrogenpolysiloxane.

### BENEFITS

The addition curable silicone rubber composition formed by methods of the invention uses as a crosslinker an organohydrogenpolysiloxane with a minimal content of SiH-functional low-molecular-weight siloxane. Thus SiH-functional low-molecular-weight siloxane is substantially absent in the cured product.

### FURTHER EXPLANATIONS; OPTIONS AND PREFERENCES

The addition curable silicone rubber composition formed by methods of the invention comprises an organohydrogenpolysiloxane containing at least two silicon-bonded hydrogen atoms in a molecule as a crosslinker. The organohydrogenpolysiloxane is synthesized through cohydrolytic condensation reaction of one or more organoalkoxysilane having an SiH functional group and one or more organoalkoxysilane free of an SiH functional group.

In one embodiment of the invention, the addition curable silicone rubber composition is a liquid addition curable silicone rubber composition comprising (A) an alkenyl-containing organopolysiloxane, (B) the organohydrogenpolysiloxane synthesized through cohydrolytic condensation reaction, and (C) an addition reaction catalyst.

Component (A) is a base polymer in the silicone rubber composition. It is an organopolysiloxane containing at least two silicon-bonded alkenyl groups in a molecule. Preferably it has the average compositional formula (1):

RₐSiO_{(4-a)/2} (1)

wherein R, which is the same or different, is a unsubstituted or substituted monovalent hydrocarbon group of 1 to 10 carbon atoms, and preferably 1 to 8 carbon atoms, and "a" is a positive number of 1.5 to 2.8, preferably 1.8 to 2.5, and more preferably 1.95 to 2.05.

Suitable silicon-bonded alkenyl groups, as represented by R in formula (1), include those of 2 to 8 carbon atoms, preferably 2 to 4 carbon atoms, such as vinyl, allyl, butenyl, pentenyl, hexenyl and heptenyl. Inter alia, vinyl is most preferred.

In the polysiloxane skeleton of component (A), the alkenyl groups may be attached to silicon atoms at ends and/or intermediate (non-terminal) positions of the molecular chain. The preferred component (A) is a linear diorganopolysiloxane having alkenyl groups attached at least to silicon atoms at both ends of the molecular chain.

The content of alkenyl groups in component (A) is specifically about 0.001 to 10 mol% and more specifically about 0.01 to 5 mol% based on the total of silicon-bonded monovalent organic groups, i.e., unsubstituted or substituted monovalent hydrocarbon groups represented by R in average compositional formula (1).

Suitable silicon-bonded organic groups other than the alkenyl groups, as represented by R in formula (1), include unsubstituted or halo-substituted monovalent hydrocarbon groups of 1 to 12 carbon atoms, and preferably 1 to 10 carbon atoms, for example, alkyl groups such as methyl, ethyl, propyl, butyl, pentyl, hexyl, cyclohexyl and heptyl, aryl groups such as phenyl, tolyl, xylyl and naphthyl, aralkyl groups such as benzyl and phenethyl, and halo-alkyl groups, such as chloromethyl, 3-chloropropyl, and 3,3,3-trifluoropropyl. Inter alia, methyl and phenyl are preferred.

Component (A) has a molecular structure which may be linear, branched or cyclic. Preferred is a linear diorganopolysiloxane having a backbone consisting essentially of diorganosiloxy units and capped with triorganosiloxy groups at both ends of the molecular chain, with the proviso that the organo groups as used herein encompass alkenyl groups as well.

Component (A) preferably has a viscosity at 25°C of 100 to 500,000 mPa-s in one embodiment because the resulting silicone rubber has good physical properties and the composition is easy to handle, and a viscosity at 25°C of 300 to 100,000 mPa-s in another embodiment. Note that the viscosity as used herein is measured by a rotational viscometer.

Examples of the organopolysiloxane as component (A) include, but are not limited to, trimethylsiloxy end-capped dimethylsiloxane-methylvinylsiloxane copolymers, trimethylsiloxy end-capped methylvinylpolysiloxane, trimethylsiloxy end-capped dimethylsiloxane-methylvinylsiloxane-methylphenylsiloxane copolymers, dimethylvinylsiloxy end-capped dimethylpolysiloxane, dimethylvinylsiloxy end-capped methylvinylpolysiloxane, dimethylvinylsiloxy end-capped dimethylsiloxane-methylvinylsiloxane copolymers, dimethylvinylsiloxy end-capped dimethylsiloxane-methylvinylsiloxane-methylphenylsiloxane copolymers, divinylmethylsiloxy end-capped dimethylpolysiloxane, divinylmethylsiloxy end-capped dimethylsiloxane-methylvinylsiloxane copolymers, trivinylsiloxy end-capped dimethylpolysiloxane, trivinylsiloxy end-capped dimethylsiloxane-methylvinylsiloxane copolymers, organosiloxane copolymers consisting of siloxane units of the formula: R¹₃SiO_{0.5}, siloxane units of the formula: R¹₂R²SiO_{0.5}, siloxane units of the formula: R¹₂SiO, and siloxane units of the formula: SiO₂, organosiloxane copolymers consisting of siloxane units of the formula: R¹₃SiO_{0.5}, siloxane units of the formula: R¹₂R²SiO_{0.5}, and siloxane units of the formula: SiO₂, organosiloxane copolymers consisting of siloxane units of the formula: R¹₂R²SiO_{0.5}, siloxane units of the formula: R¹₂SiO, and siloxane units of the formula: SiO₂, organosiloxane copolymers consisting of siloxane units of the formula: R¹R²SiO and siloxane units of the formula: R¹SiO_{1.5} or siloxane units of the formula: R²SiO_{1.5}, and mixtures comprising two or more of the foregoing organopolysiloxanes. The term "end-capped" as used herein means that a siloxane is capped with a specified group at each end of its molecular chain.

In the siloxane unit formulas, R¹ is selected from unsubstituted or substituted monovalent hydrocarbon groups other than alkenyl groups, including alkyl groups such as methyl, ethyl, propyl, butyl, pentyl, hexyl, cyclohexyl and heptyl, aryl groups such as phenyl, tolyl, xylyl and naphthyl, aralkyl groups such as benzyl and phenethyl, and halo-alkyl groups, such as chloromethyl, 3-chloropropyl, and 3,3,3-trifluoropropyl. Also, R² in the above formulas is selected from alkenyl groups, such as vinyl, allyl, butenyl, pentenyl, hexenyl and heptenyl.

Also preferably component (A) contains low-molecular-weight siloxanes with a degree of polymerization of up to 10 and free of a functional group (referred to as "non-functional" siloxanes) in an amount equal to or less than 0.5% by weight, more specifically equal to or less than 0.2% by weight, and even more specifically equal to or less than 0.1% by weight. If the content of non-functional low-molecular-weight siloxanes is more than 0.5% by weight, they not only will volatilize and adversely affect the surrounding members, but may also facilitate volatilization of SiH functional group-containing low-molecular-weight siloxanes originating from component (B) in the uncured or cured composition. It is noted that typically SiH functional group-containing low-molecular-weight siloxanes are substantially absent in component (A).

The non-functional low-molecular-weight siloxanes include cyclic ones having the formula:

(R³₂SiO)ₓ

wherein x is a positive number of 3 to 10, and R³ which may be the same or different is a unsubstituted or substituted monovalent hydrocarbon group of 1 to 10 carbon atoms. Examples of the monovalent hydrocarbon group represented by R³ are the same as exemplified above for R, and preferably include monovalent hydrocarbon groups free of aliphatic unsaturation, for example, alkyl groups such as methyl, ethyl and propyl and aryl groups such as phenyl.

The method of reducing the low-molecular-weight siloxane fraction includes thin-film evaporation at high temperature in vacuum and solvent extraction as commonly used for such purpose.

Component (B) is the essential feature of the invention. It is an organohydrogenpolysiloxane containing at least two silicon-bonded hydrogen atoms in a molecule, which is synthesized through cohydrolytic condensation reaction of one or more SiH functional group-containing organoalkoxysilanes and one or more SiH functional group-free organoalkoxysilanes.

Quite unexpectedly from the fact that the prior art organohydrogenpolysiloxane, which is prepared through equilibration polymerization of tetramethylcyclotetrasiloxane and octamethylcyclotetrasiloxane, inevitably contains SiH functional group-containing low-molecular-weight cyclic siloxanes having a degree of polymerization of 3 to 10 in an amount of about 5% by weight; an advantage arises from the organohydrogenpolysiloxane that is synthesized through cohydrolytic condensation reaction of one or more SiH functional group-containing organoalkoxysilane and one or more SiH functional group-free organoalkoxysilane. Specifically, an organohydrogenpolysiloxane can be consistently manufactured by this process such that when it is formulated as a crosslinker in a silicone rubber composition, the content of SiH functional group-containing low-molecular-weight cyclic siloxanes is reduced to 3% by weight or less (0 to 3% by weight), more specifically 1% by weight or less (0 to 1% by weight), and even more specifically 0.5% by weight or less (0 to 0.5% by weight), based on the organohydrogenpolysiloxane as a crosslinker.

The organohydrogenpolysiloxane is synthesized through cohydrolytic condensation reaction of one or more SiH functional group-containing organoalkoxysilane and one or more SiH functional group-free organoalkoxysilane.

Preferably each of the SiH functional group-containing organoalkoxysilane and the SiH functional group-free organoalkoxysilane is at least one member selected from monoalkoxysilanes and dialkoxysilanes, and more preferably from alkoxysilanes having the following formulas:

HR⁴Si(OR')₂, HR⁴₂SiOR', R⁴₂Si(OR')₂, and R⁴₃SiOR'

wherein R⁴ is each independently a silicon-bonded, unsubstituted or substituted monovalent hydrocarbon group free of aliphatic unsaturation, preferably of 1 to 10 carbon atoms, and R' is each independently an unsubstituted or alkoxy-substituted monovalent hydrocarbon group of 1 to 4 carbon atoms. Exemplary of R' are methyl, ethyl, propyl, isopropyl, butyl, isobutyl, tert-butyl, methoxymethyl, ethoxymethyl, methoxyethyl, and ethoxyethyl.

In a further preferred embodiment, the organohydrogenpolysiloxane is synthesized through cohydrolytic condensation reaction of H(CH₃)Si(OCH₃)₂, one or more members selected from (CH₃)₂Si(OCH₃)₂, (C₆H₅)₂Si(OCH₃)₂, and (CF₃C₂H₄)(CH₃)Si(OCH₃)₂, and one or more members selected from (CH₃)₃SiOCH₃ and H(CH₃)₂SiOCH₃.

With alkoxysilanes in admixture with water, cohydrolysis may be performed at a temperature of -20°C to 5°C in the presence of an acidic catalyst. Examples of the catalyst used herein include mineral acids such as hydrochloric acid and sulfuric acid, organic acids such as formic acid, acetic acid and propionic acid, acidic compounds such as p-toluenesulfonic acid and methanesulfonic acid, and acidic cation exchange resins. The catalyst is added in an amount of 0.05 to 10% by weight based on the weight of the reactants. An appropriate amount of water necessary for hydrolysis is 0.4 to 2 molar equivalents per mole of the hydrolyzable groups on the reactants.

In a preferred embodiment, the organohydrogenpolysiloxane has the following average compositional formula (2).

R⁴_{b}H_{c}SiO_{(4-b-c)/2} (2)

In formula (2), R⁴ is a silicon-bonded, unsubstituted or substituted, monovalent hydrocarbon group free of aliphatic unsaturation, preferably of 1 to 10 carbon atoms. Examples of unsubstituted or substituted monovalent hydrocarbon groups represented by R⁴ include alkyl groups such as methyl, ethyl, propyl, isopropyl, butyl, isobutyl, tert-butyl, pentyl, neopentyl, hexyl, cyclohexyl, octyl, nonyl and decyl, aryl groups such as phenyl, tolyl, xylyl and naphthyl, aralkyl groups such as benzyl, phenylethyl and phenylpropyl, and halo-substituted forms of the foregoing in which some or all hydrogen atoms are replaced by halogen atoms (e.g., fluoro, bromo, chloro), such as chloromethyl, chloropropyl, bromoethyl, and trifluoropropyl. Preferred monovalent hydrocarbon groups represented by R⁴ are unsubstituted or fluoro-substituted monovalent hydrocarbon groups of 1 to 8 carbon atoms. Of these, methyl, ethyl, propyl, phenyl, and 3,3,3-trifluoropropyl are more preferred, with methyl and phenyl being most preferred. The subscript b is a positive number of 0.7 to 2.1, c is a positive number of 0.001 to 1.0, and the sum of b+c is 0.8 to 3.0. Preferably, b is from 1.0 to 2.0, c is from 0.01 to 1.0, and the sum of b+c is from 1.5 to 2.5.

The organohydrogenpolysiloxane contains at least two (typically 2 to about 300) SiH groups, and preferably at least three (typically 3 to about 200, more typically 4 to about 150) SiH groups in a molecule, while the SiH groups may be located at ends or intermediate positions of the molecular chain or both. The organohydrogenpolysiloxane has a molecular structure which may be linear, cyclic, branched or three-dimensional network. The number of silicon atoms per molecule (or degree of polymerization) is specifically from 2 to about 300, more specifically from 3 to about 200, and even more specifically from 4 to about 150. Desired are those which have a viscosity at 25°C of 0.1 to 1,000 mPa-s, and more specifically 0.5 to 500 mPa-s and thus are liquid at room temperature (25°C).

Examples of the organohydrogenpolysiloxane as component (B) include the following as long as the content of SiH functional group-containing low-molecular-weight cyclic siloxanes is in the specific range. Included are 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, methylhydrogensiloxane-dimethylsiloxane cyclic copolymers, trimethylsiloxy end-capped methylhydrogenpolysiloxane, trimethylsiloxy end-capped dimethylsiloxane-methylhydrogensiloxane copolymers, trimethylsiloxy end-capped dimethylsiloxane-methylhydrogensiloxane-methylphenylsiloxane copolymers, trimethylsiloxy end-capped dimethylsiloxane-methylhydrogensiloxane-diphenylsiloxane copolymers, dimethylhydrogensiloxy end-capped methylhydrogenpolysiloxane, dimethylhydrogensiloxy end-capped dimethylpolysiloxane, dimethylhydrogensiloxy end-capped dimethylsiloxane-methylhydrogensiloxane copolymers, dimethylhydrogensiloxy end-capped dimethylsiloxane-methylphenylsiloxane copolymers, dimethylhydrogensiloxy end-capped dimethylsiloxane-diphenylsiloxane copolymers, dimethylhydrogensiloxy end-capped methylphenylpolysiloxane, dimethylhydrogensiloxy end-capped diphenylpolysiloxane, and substituted forms of the foregoing in which some or all methyl groups are replaced by other alkyl groups such as ethyl and propyl; as well as organosiloxane copolymers consisting of siloxane units of the formula: R⁴₃SiO_{0.5}, siloxane units of the formula: R⁴₂HSiO_{0.5}, and siloxane units of the formula: SiO₂, organosiloxane copolymers consisting of siloxane units of the formula: R⁴₂HSiO_{0.5} and siloxane units of the formula: SiO₂, organosiloxane copolymers consisting of siloxane units of the formula: R⁴HSiO, siloxane units of the formula: R⁴SiO_{1.5}, and siloxane units of the formula: HSiO_{1.5}, and mixtures comprising two or more of the foregoing organopolysiloxanes. Herein, R⁴ is selected from monovalent hydrocarbon groups other than alkenyl groups, examples of which are as exemplified above.

Although the amount of component (B) compounded is not particularly limited, an appropriate amount is specifically 0.3 to 20 parts, more specifically 0.5 to 15 parts, and even more specifically 0.8 to 10 parts by weight per 100 parts by weight of component (A). Preferably, component (B) is used in such amounts that 1 to 4 moles and more preferably 1 to 3 moles of silicon-bonded hydrogen atoms are available per mole of silicon-bonded alkenyl groups in component (A) or differently stated, 1 to 4 and more preferably 1 to 3 silicon-bonded hydrogen atoms are available per silicon-bonded alkenyl group in component (A). If there are available less than 1 mole of silicon-bonded hydrogen atoms in component (B) per mole of silicon-bonded alkenyl groups in component (A), then the composition may not cure to a full extent. If more than 4 moles, a substantial amount of unreacted SiH functional group-containing low-molecular-weight siloxanes may be left after curing.

Component (C) is an addition reaction catalyst. Use may be made of any catalysts that promote hydrosilylating addition reaction between silicon-bonded alkenyl groups in component (A) and SiH groups in component (B). Suitable catalysts include platinum group metals and compounds thereof, for example, platinum, palladium, rhodium, chloroplatinic acid, alcohol-modified chloroplatinic acid, coordination compounds of chloroplatinic acid with olefins, vinylsiloxane or acetylene compounds, tetrakis(triphenylphosphine)palladium, chlorotris(triphenylphosphine)rhodium. Inter alia, platinum compounds are preferred.

The addition reaction catalyst may be used in a catalytic amount, specifically in such an amount as to provide 0.5 to 1,000 ppm, more specifically 1 to 500 ppm, and even more specifically 10 to 100 ppm of metal element based on the weight of components (A) and (B) combined. With catalyst amounts to provide less than 0.5 ppm, addition reaction may run very slowly or the composition may not cure. Excessive catalyst amounts add to the cost and lack economy.

Optionally, the silicone rubber composition of the invention may further comprise (D) finely divided silica which serves as a reinforcement. Specifically, finely divided silica can impart high tear resistance to the composition. When finely divided silica is used as reinforcement, a cured silicone rubber meeting the desired tear strength as might be required in a particular application can be obtained.

The finely divided silica specifically has a specific surface area of at least 50 m²/g, more specifically 50 to 400 m²/g, and even more specifically 100 to 300 m²/g, as measured by the BET method. Silica with a specific surface area of less than 50 m²/g may fail to impart the desired tear strength.

The finely divided silica used herein may include a variety of well-known silica species commonly used as a reinforcing filler for silicone rubber, for example, fumed silica and precipitated silica. Such silicas may be used alone or in admixture of two or more.

The finely divided silica may be used as such or after treatment with suitable organosilicon compounds in order to impart fluidity to the composition. The organosilicon compounds include methylchlorosilanes (e.g., trimethylchlorosilane, dimethyldichlorosilane and methyltrichlorosilane), dimethylpolysiloxane, and hexaorganodisilazanes (e.g., hexamethyldisilazane, divinyltetramethyldisilazane and dimethyltetravinyldisilazane).

The amount of component (D) used may be equal to or less than 50 parts by weight (i.e., 0 to 50 parts by weight) per 100 parts by weight of the organopolysiloxane (A). An appropriate amount of component (D), when used, is 0.1 to 50 parts, more specifically 1 to 50 parts, and even more specifically 5 to 40 parts by weight per 100 parts by weight of component (A). Outside the range, too small an amount may fail to achieve the desired effect whereas too large an amount may rather detract from the fluidity of the composition and adversely affect working.

In addition to components (A) to (D) described above, the composition of the invention may further contain any of regulator compounds that are well known to exert a cure inhibiting effect against the addition reaction catalyst. Suitable regulator compounds include phosphorus compounds such as triphenylphosphine, nitrogen-containing compounds such as tributylamine, tetramethylethylenediamine, and benzotriazole, sulfur-containing compounds, acetylene compounds, compounds having at least two alkenyl groups, hydroperoxy compounds, and maleic acid derivatives. The regulator compound exerts a cure inhibiting effect, the degree of which largely depends on the chemical structure of the regulator compound. Thus the amount of the regulator compound added is preferably adjusted, whenever a particular regulator compound is selected, to an optimum amount for the particular compound. In general, the composition with too little of the regulator may not have a long-term storage stability at room temperature whereas too much of the regulator may inhibit the cure process.

Other optional components include inorganic fillers such as crystalline silica, hollow fillers, silsesquioxane, fumed titanium dioxide, magnesium oxide, zinc oxide, iron oxide, aluminum hydroxide, magnesium carbonate, calcium carbonate, zinc carbonate, laminar mica, carbon black, diatomaceous earth and glass fibers; and similar inorganic fillers which have been surface treated with organosilicon compounds such as organoalkoxysilane compounds, organochlorosilane compounds, organosilazane compounds, and low-molecular-weight siloxane compounds. Also included are silicone rubber powder and silicone resin powder.

The composition of the invention may further contain optional components insofar as the objects of the invention are not compromised. Suitable other components include non-functional organopolysiloxanes free of silicon-bonded hydrogen atoms or alkenyl groups, organic solvents, anti-crepe-hardening agents, plasticizers, thixotropic agents, pigments, dyes, mildew-proof agents, and the like.

The addition curable silicone rubber composition of the invention may be prepared by intimately mixing together components (A) to (C) and optional components on an ordinary mixing or kneading apparatus such as a kneader or planetary mixer.

In the addition curable silicone rubber composition of the invention, the content of cyclic low-molecular-weight siloxanes having a degree of polymerization of up to 10 and containing at least one SiH functional group is specifically equal to or less than 0.5% by weight (i.e., 0 to 0.5%), more specifically equal to or less than 0.3% by weight (i.e., 0 to 0.3%), and even more specifically equal to or less than 0.2% by weight (i.e., 0 to 0.2%), based on the weight of the entire composition, typically the total weight of components (A), (B) and (C).

Typical SiH functional group-containing cyclic low-molecular-weight siloxanes include those of the following formulas. 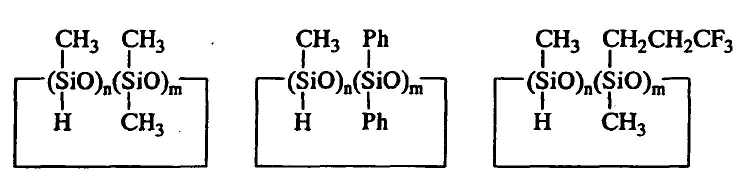 Herein, n is an integer of 1 to 10, m is an integer of 0 to 9, more specifically 1 to 8, and the sum n+m is an integer of 3 to 10, more specifically 4 to 10. Ph denotes phenyl.

When the composition is cured into silicone rubber through crosslinking reaction, some or most of these SiH functional group-containing cyclic low-molecular-weight siloxanes are incorporated within the cured product through the crosslinking reaction. The remainder, unreacted SiH functional group-containing low-molecular-weight siloxanes are left in a free state within the cured product, which will volatilize to the atmosphere during storage or service and deposit on the surrounding members to give rise to serious problems including contact failure, poor adhesion, hydrophobic surface and appearance changes.

According to the invention, the organohydrogenpolysiloxane containing at least two silicon-bonded hydrogen atoms in a molecule as synthesized through cohydrolytic condensation reaction of one or more SiH functional group-containing organoalkoxysilanes and one or more SiH functional group-free organoalkoxysilanes is used as a crosslinker or component (B) in an addition curable silicone rubber composition. Then, the addition curable silicone rubber composition formed by methods of the invention has a content of cyclic low-molecular-weight siloxanes having a degree of polymerization of up to 10 and containing at least one SiH functional group that falls in the specific range.

Notably, the entire silicone rubber composition has a total content of non-functional low-molecular-weight siloxanes and SiH functional low-molecular-weight siloxanes that is preferably equal to or less than 0.7% by weight (i.e., 0 to 0.7%), and more preferably equal to or less than 0.5% by weight (i.e., 0 to 0.5%).

In the invention, the content of these low-molecular-weight siloxanes (the total content of non-functional low-molecular-weight siloxanes and SiH functional low-molecular-weight siloxanes) is determined by placing 1 g of a sample in a vial, adding 10 cc of acetone thereto, holding at room temperature (25°C) for 16 hours, and analyzing the low-molecular-weight siloxanes extracted in acetone by gas chromatography (FID detector). The non-functional low-molecular-weight siloxanes and SiH functional low-molecular-weight siloxanes can be identified and discerned by GC-MS and Si²⁹-NMR.

The addition curable silicone rubber composition formed by methods of the invention may be cured under conditions as employed with well-known silicone rubber compositions of this type. For example, the composition may fully cure at room temperature. If desired, the composition may be cured at elevated temperature, specifically by heating at 100 to 200°C, and more specifically 150 to 180°C for 1 to 10 minutes, and more specifically 1 to 5 minutes.

The silicone rubber composition formed by methods of the invention cures into a cured product or silicone rubber in which as in the composition prior to curing, the content of cyclic low-molecular-weight siloxanes having a degree of polymerization of up to 10 and containing at least one SiH functional group is specifically equal to or less than 0.5% by weight (i.e., 0 to 0.5%), more specifically equal to or less than 0.3% by weight (i.e., 0 to 0.3%), and even more specifically equal to or less than 0.2% by weight (i.e., 0 to 0.2%), based on the weight of the cured product. Also, the total content of non-functional low-molecular-weight siloxanes and SiH functional low-molecular-weight siloxanes is preferably equal to or less than 0.6% by weight (i.e., 0 to 0.6%), and more preferably equal to or less than 0.4% by weight (i.e., 0 to 0.4%).

### EXAMPLE

Synthesis Examples, Examples and Comparative Examples are given below for further illustrating the invention although the invention is not limited thereto. The viscosity is measured at 25°C by a rotational viscometer.

### Synthesis Example 1

To a mixed solution of 8.32 g of (CH₃)₃SiOCH₃, 86.4 g of (CH₃)₂Si(OCH₃)₂, and 84.8 g of H(CH₃)Si(OCH₃)₂ at -10°C was added 2.7 g of sulfuric acid. Thereafter, 33 g of water was added dropwise at a rate so that the temperature might not exceed -5°C. After the completion of dropwise addition, the contents were stirred for one hour. At the end of stirring, the waste acid was separated off, 3 g of sodium hydrogen carbonate was added, and neutralization continued for 2 hours. The neutralizing agent was filtered off, after which vacuum stripping at 140°C and 3.6 kPa yielded a hydrogenpolysiloxane having a viscosity of 15 mPa-s and a silicon-bonded hydrogen atom content of 0.86 wt%.

For this hydrogenpolysiloxane, after acetone extraction at 25°C for 16 hours, the content of low-molecular-weight cyclic siloxanes having a degree of polymerization of up to 10 (that refers to the total content of SiH-containing fraction and SiH-free fraction, hereinafter) was determined by GC-MS and Si²⁹-NMR, finding a content of 0.27 wt%, with 0.18 wt% of SiH functional fraction.

### Comparative Synthesis Example 1

To a mixed solution of 53.3 g of octamethylcyclotetrasiloxane, 48 g of tetramethylcyclotetrasiloxane, and 6.5 g of hexamethyldisiloxane at 0°C was added 3 g of sulfuric acid. This was stirred and mixed for 6 hours. Thereafter, 1.3 g of water was added, and the contents were stirred and mixed at room temperature for one hour. At the end of stirring, the waste acid was separated off, 3 g of sodium hydrogen carbonate was added, and neutralization continued for 2 hours. The neutralizing agent was filtered off, after which vacuum stripping at 140°C and 3.6 kPa yielded a hydrogenpolysiloxane having a viscosity of 20 mPa-s and a silicon-bonded hydrogen atom content of 0.73 wt%.

For this hydrogenpolysiloxane, after acetone extraction at 25°C for 16 hours, the content of low-molecular-weight cyclic siloxanes having a degree of polymerization of up to 10 was determined by GC-MS and Si²⁹-NMR, finding a content of 4.55 wt%, with 4.37 wt% of SiH functional fraction.

### Example 1

A composition "A" was prepared by mixing together 100 parts by weight of a vinyldimethylsilyl end-capped dimethylpolysiloxane having a content of low-molecular-weight cyclic siloxanes having a degree of polymerization of up to 10 of 0.001 wt% and a viscosity of about 600 mPa-s, 0.05 part by weight of 1-ethynyl cyclohexanol, 0.1 part by weight of a dimethylpolysiloxane solution of chloroplatinic acid/1,3-divinyltetramethyldisiloxane complex having a platinum atom content of 1 wt%, and 3.5 parts by weight of the organohydrogenpolysiloxane obtained in Synthesis Example 1.

For this composition "A", after acetone extraction at 25°C for 16 hours, the content of low-molecular-weight cyclic siloxanes having a degree of polymerization of up to 10 was determined by GC-MS and Si²⁹-NMR, finding a content of 0.01 wt%, with 0.006 wt% of SiH functional fraction.

Composition "A" was press cured at 120°C for 10 minutes into a rubber sheet of 2 mm thick. For this rubber sheet, after acetone extraction at 25°C for 16 hours, the content of low-molecular-weight cyclic siloxanes having a degree of polymerization of up to 10 was determined by GC-MS and Si²⁹-NMR, finding a content of 0.009 wt%, with 0.005 wt% of SiH functional fraction.

### Comparative Example 1

A composition "B" was prepared as in Example 1 aside from using 4.1 parts by weight of the organohydrogenpolysiloxane obtained in Comparative Synthesis Example 1 instead of the organohydrogenpolysiloxane obtained in Synthesis Example 1.

For this composition "B", after acetone extraction at 25°C for 16 hours, the content of low-molecular-weight cyclic siloxanes having a degree of polymerization of up to 10 was determined by GC-MS and Si²⁹ -NMR, finding a content of 0.18 wt%, with 0.172 wt% of SiH functional fraction.

Composition "B" was press cured at 120°C for 10 minutes into a rubber sheet of 2 mm thick. For this rubber sheet, after acetone extraction at 25°C for 16 hours, the content of low-molecular-weight cyclic siloxanes having a degree of polymerization of up to 10 was determined by GC-MS and Si²⁹-NMR, finding a content of 0.15 wt%, with 0.144 wt% of SiH functional fraction.

## Claims

1. A method of forming a crosslinker in the form of an organohydrogenpolysiloxane containing at least two silicon-bonded hydrogen atoms in a molecule for an addition curable silicone rubber composition, comprising
cohydrolytic condensation of one or more organoalkoxysilane having an SiH functional group and one or more organoalkoxysilane free of an SiH functional group.

2. The method of claim 1, wherein said organoalkoxysilane having an SiH functional group and/or said organoalkoxysilane free of an SiH functional group is selected from monoalkoxysilanes and dialkoxysilanes.

3. The method of claim 1 or 2, wherein said organoalkoxysilane having an SiH functional group and/or said organoalkoxysilane free of an SiH functional group is an alkoxysilane having any one of the following formulas:
HR⁴Si (OR')₂, HR⁴₂SiOR', R⁴₂Si(OR')₂, and R⁴₃SiOR'
wherein R⁴ is each independently a silicon-bonded, unsubstituted or substituted monovalent hydrocarbon group free of aliphatic unsaturation, and R' is each independently an unsubstituted or alkoxy-substituted monovalent hydrocarbon group of 1 to 4 carbon atoms.

4. The method of any one of claims 1 to 3 wherein said organohydrogenpolysiloxane is synthesized through cohydrolytic condensation reaction of H(CH₃)Si(OCH₃)₂, at least one member selected from (CH₃)₂Si(OCH₃)₂, (C₆H₅)₂Si(OCH₃)₂, and (CF₃C₂H₄)(CH₃)Si(OCH₃)₂, and at least one member selected from (CH₃)₃SiOCH₃ and H(CH₃)₂SiOCH₃.

5. The method of any one of claims 1 to 4 wherein said organohydrogenpolysiloxane contains cyclic low-molecular-weight siloxanes having a degree of polymerization of up to 10 and containing at least one silicon-bonded hydrogen atom in an amount of up to 3% by weight.

6. The method of any one of claim 1 to 5 wherein said organohydrogenpolysiloxane is synthesized through cohydrolytic condensation reaction by mixing the organoalkoxysilane having an SiH functional group and the organoalkoxysilane free of an SiH functional group with water at -20 to 5°C in the presence of an acidic catalyst.

7. The method of claim 6 wherein said acidic catalyst is selected from the group consisting of a mineral acid, an organic acid, an acidic compound and an acidic cation exchange resin.

8. The method of claim 6 or 7 wherein said acidic catalyst is added in an amount of 0.05 to 10% by weight based on the weight of the reactants.

9. The method of any one of claims 6 to 8 wherein water is added in an amount of 0.4 to 2 molar equivalents per mole of the hydrolysable groups on the reactants.

10. A method of preparing a liquid addition curable silicone rubber composition, comprising intimately mixing components (A), (B) and (C) and any optional components using an ordinary mixing or kneading apparatus, wherein
(A) is an alkenyl group-containing organopolysiloxane,
(B) is an organohydrogenpolysiloxane synthesised by cohydrolytic condensation, as defined in any one of the preceding claims, and
(C) is an addition reaction catalyst.

11. The method of claim 10 wherein the content of cyclic low-molecular-weight siloxanes having a degree of polymerization of up to 10 and containing at least one silicon-bonded hydrogen atom is up to 0.5% by weight based on the weight of the silicone rubber composition.

12. The method of any one of claim 10 or 11 wherein component (A) is represented by the following average compositional formula (1):
RₐSiO_{(4-a)/2} (1)
wherein R, which is the same or different, is a unsubstituted or substituted monovalent hydrocarbon group of 1 to 10 carbon atoms, and preferably 1 to 8 carbon atoms, and "a" is a positive number of 1.5 to 2.8,
component (B) is represented by the following average compositional formula (2):
R⁴_{b}H_{c}SiO_{(4-b-c)/2}
wherein R⁴ is a silicon-bonded, unsubstituted or substituted, monovalent hydrocarbon group free of aliphatic unsaturation, "b" is a positive number of 0.7 to 2.1, "c" is a positive number of 0.001 to 1.0, and the sum of b+c is 0.8 to 3.0, and
component (C) is a platinum group metal or compound thereof.

13. The method of any one of claims 10 to 12, wherein finely divided silica (D) is further mixed with components (A) to (C).

14. A method of forming a silicone rubber comprising curing an addition curable silicone rubber composition of any one of claims 10-13.

## Patentansprüche

1. Verfahren zur Ausbildung eines Vernetzers in Form eines Organohydrogenpolysiloxans, das zumindest zwei siliciumgebundene Wasserstoffatome pro Molekül enthält, für eine additionshärtbare Siliconkautschukzusammensetzung, welches
die cohydrolytische Kondensation eines oder mehrerer Organoalkoxysilane, die SiH-funktionelle Gruppen aufweisen, und eines oder mehrerer Organoalkoxysilane, die frei von SiH-funktionellen Gruppen sind, umfasst.

2. Verfahren nach Anspruch 1, wobei das Organoalkoxysilan, das eine SiH-funktionelle Gruppe aufweist, und/oder das Organoalkoxysilan, das frei von SiH-funktionellen Gruppen ist, aus Monoalkoxysilanen und Dialkoxysilanen ausgewählt ist.

3. Verfahren nach Anspruch 1 oder 2, wobei das Organoalkoxysilan, das eine SiH-funktionelle Gruppe aufweist, und/oder das Organoalkoxysilan, das frei von SiH-funktionellen Gruppen ist, ein Alkoxysilan einer der folgenden Formeln ist:
HR⁴Si(OR')₂, HR⁴₂SiOR', R⁴₂Si(OR')₂ und R⁴₃SiOR',
wobei die R⁴ unabhängig voneinander siliciumgebundene, unsubstituierte oder substituierte einwertige Kohlenwasserstoffgruppen sind, die frei von aliphatischer Unsättigung sind, und die R' unabhängig voneinander unsubstituierte oder alkoxysubstituierte einwertige Kohlenwasserstoffgruppen mit 1 bis 4 Kohlenstoffatomen sind.

4. Verfahren nach einem der Ansprüche 1 bis 3, wobei das Organohydrogenpolysiloxan durch eine cohydrolytische Kondensationsreaktion von H(CH₃)Si(OCH₃)₂, zumindest einem Element aus (CH₃)₂Si(OCH₃)₂, (C₆H₅)₂Si(OCH₃)₂ und (CF₃C₂H₄)(CH₃)Si(OCH₃)₂ und zumindest einem Element aus (CH₃)₃SiOCH₃ und H(CH₃)₂SiOCH₃ synthetisiert wird.

5. Verfahren nach einem der Ansprüche 1 bis 4, wobei das Organohydrogenpolysiloxan zyklische niedermolekulare Siloxane mit einem Polymerisationsgrad von bis zu 10 enthält und zumindest ein siliciumgebundenes Wasserstoffatom in einer Menge von bis zu 3 Gew.-% enthält.

6. Verfahren nach einem der Ansprüche 1 bis 5, wobei das Organohydrogenpolysiloxan durch eine cohydrolytische Kondensationsreaktion synthetisiert wird, indem das Organoalkoxysilan, das eine SiH-funktionelle Gruppe aufweist, und das Organoalkoxysilan, das frei von SiH-funktionellen Gruppen ist, bei -20 bis 5 °C in Gegenwart eines sauren Katalysators mit Wasser vermischt werden.

7. Verfahren nach Anspruch 6, wobei der saure Katalysator aus der aus einer Mineralsäure, einer organischen Säure, einer sauren Verbindung und einem sauren Kationenaustauschharz bestehenden Gruppe ausgewählt ist.

8. Verfahren nach Anspruch 6 oder 7, wobei der saure Katalysator in einer Menge von 0,5 bis 10 Gew.-%, bezogen auf das Gewicht der Reaktanten, zugesetzt wird.

9. Verfahren nach einem der Ansprüche 6 bis 8, wobei Wasser in einer Menge von 0,2 bis 4 Moläquivalenten pro Mol der hydrolysierbaren Gruppen auf den Reaktanten zugesetzt wird.

10. Verfahren zur Herstellung einer flüssigen additionshärtbaren Siliconkautschukzusammensetzung, welches das innige Vermischen der Bestandteile (A), (B) und (C) und beliebiger optionaler Bestandteile unter Verwendung eines herkömmliche Misch- oder Knetapparats umfasst, wobei
(A) ein Alkenlygruppen-hältiges Organopolysiloxan ist,
(B) ein Organohydrogenpolysiloxan, das durch cohydrolytische Kondensation synthetisiert wird, nach einem der vorangegangenen Ansprüche ist und
(C) ein Additionsreaktionskatalysator ist.

11. Verfahren nach Anspruch 10, wobei der Gehalt an zyklischen niedermolekularen Siloxanen mit einem Polymerisationsgrad von bis zu 10 und mit zumindest einem siliciumgebundenen Wasserstoffatom bis zu 0,5 Gew.-%, bezogen auf das Gewicht der Siliconkautschukzusammensetzung, beträgt.

12. Verfahren nach einem der Ansprüche 10 oder 11, wobei Bestandteil (A) durch die folgende mittlere Zusammensetzungsformel (1) dargestellt ist:
RₐSiO_{(4-a)/2} (1)
worin die R, die gleich oder unterschiedlich sein können, unsubstituierte oder substituierte einwertige Kohlenwasserstoffgruppen mit 1 bis 10 Kohlenstoffatomen und vorzugsweise 1 bis 8 Kohlenstoffatomen sind und "a" eine positive Zahl von 1,5 bis 2,8 ist,
Bestandteil (B) durch die folgende mittlere Zusammensetzungsformel (2) dargestellt ist:
R⁴_{b}H_{c}SiO_{(4-b-c)/2}
worin R⁴ eine siliciumgebundene, unsubstituierte oder substituierte einwertige Kohlenwasserstoffgruppe ist, die frei von aliphatischer Unsättigung ist, "b" eine positive Zahl von 0,7 bis 2,1 ist, "c" eine positive Zahl von 0,001 bis 1,0 ist und die Summe aus b+c 0,8 bis 3,0 ist, und
Bestandteil (C) ein Platingruppenmetall oder eine Verbindung davon ist.

13. Verfahren nach einem der Ansprüche 10 bis 12, wobei weiters feinverteiltes Silica (D) mit den Bestandteilen (A) bis (C) vermischt wird.

14. Verfahren zur Herstellung eines Siliconkautschuks, welches das Härten einer additionshärtbaren Siliconkautschukzusammensetzung nach einem der Ansprüche 10-13 umfasst.

## Revendications

1. Procédé pour former un agent de réticulation sous la forme d'un organohydrogénopolysiloxane contenant au moins deux atomes d'hydrogène liés au silicium par molécule pour une composition de caoutchouc siliconé durcissable par addition, comprenant la condensation cohydrolytique d'un ou plusieurs organoalcoxysilanes ayant un groupe fonctionnel SiH et d'un ou plusieurs organoalcoxysilanes exempts de groupe fonctionnel SiH.

2. Procédé selon la revendication 1, dans lequel ledit organoalcoxysilane ayant un groupe fonctionnel SiH et/ou ledit organoalcoxysilane exempt de groupe fonctionnel SiH sont choisis parmi les monoalcoxysilanes et les dialcoxysilanes.

3. Procédé selon la revendication 1 ou 2, dans lequel ledit organoalcoxysilane ayant un groupe fonctionnel SiH et/ou ledit organoalcoxysilane exempt de groupe fonctionnel SiH sont des alcoxysilanes ayant l'une quelconque des formules suivantes :
HR⁴Si(OR')₂, HR⁴₂SiOR', R⁴₂Si(OR')₂, et R⁴₃SiOR'
où chaque R⁴ est indépendamment un groupe hydrocarboné monovalent substitué ou non substitué, lié au silicium, exempt d'insaturation aliphatique, et chaque R' est indépendamment un groupe hydrocarboné monovalent non substitué ou alcoxy-substitué ayant de 1 à 4 atomes de carbone.

4. Procédé selon l'une quelconque des revendications 1 à 3, dans lequel ledit organohydrogéno-polysiloxane est synthétisé par une réaction de condensation cohydrolytique de H(CH₃)Si(OCH₃)₂, d'au moins un membre choisi parmi (CH₃)₂Si(OCH₃)₂, (C₆H₅)₂Si(OCH₃)₂, et (CF₃C₂H₄) (CH₃)Si(OCH₃)₂, et d'au moins un membre choisi parmi (CH₃)₃SiOCH₃ et H(CH₃)₂SiOCH₃.

5. Procédé selon l'une quelconque des revendications 1 à 4, dans lequel ledit organohydrogénopolysiloxane contient des siloxanes cycliques de faible masse moléculaire ayant un degré de polymérisation allant jusqu'à 10 et contenant au moins un atome d'hydrogène lié au silicium, en une quantité allant jusqu'à 3 % en poids.

6. Procédé selon l'une quelconque des revendications 1 à 5, dans lequel ledit organohydrogénopolysiloxane est synthétisé par une réaction de condensation cohydrolytique par mélange de l'organoalcoxysilane ayant un groupe fonctionnel SiH et de l'organoalcoxysilane exempt de groupe fonctionnel SiH avec de l'eau à une température de -20 à 5°C en présence d'un catalyseur acide.

7. Procédé selon la revendication 6, dans lequel ledit catalyseur acide est choisi dans le groupe constitué par un acide minéral, un acide organique, un composé acide et une résine échangeuse de cations acide.

8. Procédé selon la revendication 6 ou 7, dans lequel ledit catalyseur acide est ajouté en une quantité de 0,05 à 10 % en poids par rapport au poids des réactifs.

9. Procédé selon l'une quelconque des revendications 6 à 8, dans lequel de l'eau est ajoutée en une quantité de 0,4 à 2 équivalents molaires par mole des groupes hydrolysables sur les réactifs.

10. Procédé pour préparer une composition de caoutchouc siliconé durcissable par addition liquide, comprenant le mélange intime des composants (A), (B) et (C) et de quelconques composants facultatifs par utilisation d'un dispositif ordinaire de mélange ou de malaxage, dans lequel
(A) est un organopolysiloxane contenant un groupe alcényle,
(B) est un organohydrogénopolysiloxane synthétisé par condensation cohydrolytique, comme défini dans l'une quelconque des revendications précédentes, et
(C) est un catalyseur de réaction d'addition.

11. Procédé selon la revendication 10, dans lequel la teneur en siloxanes cycliques de faible masse moléculaire ayant un degré de polymérisation allant jusqu'à 10 et contenant au moins un atome d'hydrogène lié au silicium va jusqu'à 0,5 % en poids par rapport au poids de la composition de caoutchouc siliconé.

12. Procédé selon l'une quelconque des revendications 10 et 11, dans lequel
le composant (A) est représenté par la formule de composition moyenne (1) suivante :
RₐSiO_{(4-a)/2} (1)
dans laquelle les R, qui sont identiques ou différents, sont chacun un groupe hydrocarboné monovalent substitué ou non substitué ayant de 1 à 10 atomes de carbone, de préférence de 1 à 8 atomes de carbone, et "a" est un nombre positif de 1,5 à 2,8,
le composant (B) est représenté par la formule de composition moyenne (2) suivante :
R⁴_{b}H_{c}SiO_{(4-b-c)}/2
dans laquelle R⁴ est un groupe hydrocarboné monovalent substitué ou non substitué, lié au silicium, exempt d'insaturation aliphatique, "b" est un nombre positif de 0,7 à 2,1, "c" est un nombre positif de 0,001 à 1,0, et la somme b+c va de 0,8 à 3,0, et
le composant (C) est un métal du groupe du platine ou un composé de celui-ci.

13. Procédé selon l'une quelconque des revendications 10 à 12, dans lequel de la silice finement divisée (D) est en outre mélangée avec les composants (A) à (C).

14. Procédé pour former un caoutchouc siliconé, comprenant le durcissement d'une composition de caoutchouc siliconé durcissable par addition de l'une quelconque des revendications 10 à 13.
